Europäisches Patentamt

European Patent Office

Office européen des brevets

(11) Numéro de publication: **0 512 913 B1**

(12) **FASCICULE DE BREVET EUROPEEN**

(45) Date de publication de fascicule du brevet: **09.08.95**   (51) Int. Cl.6: **B01J 29/04**, C10G 11/05

(21) Numéro de dépôt: **92401255.2**

(22) Date de dépôt: **04.05.92**

(54) **Catalyseur de craquage catalytique de charges hydrocarbonées comprenant un phosphate de gallium substitué.**

(30) Priorité: **06.05.91 FR 9105674**

(43) Date de publication de la demande:
**11.11.92 Bulletin 92/46**

(45) Mention de la délivrance du brevet:
**09.08.95 Bulletin 95/32**

(84) Etats contractants désignés:
**BE DE ES GB IT NL**

(56) Documents cités:
EP-A- 0 147 991       EP-A- 0 158 349
EP-A- 0 158 976       EP-A- 0 226 219
EP-A- 0 230 005       EP-A- 0 293 919
EP-A- 0 417 863

(73) Titulaire: **INSTITUT FRANCAIS DU PETROLE**
**4, Avenue de Bois Préau**
**F-92502 Rueil-Malmaison (FR)**

(72) Inventeur: **Joly, Jean-François**
**20, rue Béranger**
**F-75003 Paris (FR)**
Inventeur: **Chapus, Thierry chez M./Mme Fourtanier**
**17, rue Cramail**
**F-92500 Rueil Malmaison (FR)**
Inventeur: **Marcilly, Christian**
**91 ter rue Condorcet**
**F-78800 Houilles (FR)**
Inventeur: **Guth, Jean-Louis**
**59, rue Bellevue Brunstatt**
**F-68200 Mulhouse (FR)**
Inventeur: **Kessler, Henri**
**17, rue de la Forêt**
**F-68270 Wittenheim (FR)**

EP 0 512 913 B1

## Description

La présente invention concerne un catalyseur de conversion de charges hydrocarbonées comprenant un phosphate de gallium substitué, associé à une matrice habituellement amorphe ou mal cristallisée et éventuellement à une zéolithe Y de structure faujasite.

Le catalyseur de la présente invention est particulièrement bien adapté au craquage de fractions pétrolières en vue de produire une quantité importante de distillats moyens et une essence ayant un indice d'octane élevé. Le catalyseur de la présente invention est particulièrement bien adapté au craquage de fractions pétrolières lourdes.

La présente invention concerne également le procédé de craquage de charges pétrolières lourdes, en présence du catalyseur défini ci-avant, ainsi que les procédés de préparation dudit catalyseur. Le craquage des charges hydrocarbonées, permettant d'obtenir des rendements élevés en essence pour automobile de très bonne qualité, s'est imposé dans l'industrie pétrolière dès la fin des années 1930. L'introduction des procédés fonctionnant en lit fluide (FCC ou Fluid Catalytic Cracking) ou en lit mobile (tel le TCC) dans lesquels le catalyseur circule en permanence entre la zone réactionnelle et le régénérateur où il est débarrassé du coke par combustion en présence d'un gaz contenant de l'oxygène a introduit un progrès important par rapport à la technique du lit fixe. Les unités à lit fluide (FCC) sont maintenant beaucoup plus répandues que celles à lit mobile. Le craquage est habituellement réalisé vers 500 °C, sous une pression totale voisine de la pression atmosphérique et en l'absence d'hydrogène.

Les catalyseurs les plus utilisés dans les unités de craquage sont depuis le début des années 1960 des zéolithes habituellement de structure faujasite. Ces zéolithes, incorporées dans une matrice amorphe, par exemple constituée de silice-alumine amorphe, et pouvant contenir des proportions variables d'argiles, sont caractérisées par des activités craquantes vis-à-vis des hydrocarbures 1000 à 10000 fois supérieures à celles des catalyseurs silice-alumine riches en silice utilisés jusque vers la fin des années 1950.

Vers la fin des années 1970, le manque de disponibilité en pétrole brut et la demande croissante en essence à haut indice d'octane ont conduit les raffineurs à traiter des bruts de plus en plus lourds. Le traitement de ces derniers constitue un problème difficile pour le raffineur en raison de leur teneur élevée en poisons des catalyseurs, notamment en composés métalliques (en particulier nickel et vanadium), des valeurs inhabituelles en carbone Conradson et surtout en composés asphalténiques.

Cette nécessité de traiter des charges lourdes et d'autres problèmes plus récents, tels que la suppression progressive mais générale dans l'essence des additifs à base de plomb, l'évolution lente mais sensible dans certains pays de la demande en distillats moyens (kérosènes et gazoles), ont de plus incité les raffineurs à rechercher des catalyseurs améliorés permettant d'atteindre notamment les objectifs suivants :

- catalyseurs plus stables thermiquement et hydrothermiquement et plus tolérants aux métaux,
- produire moins de coke à conversion identique,
- obtenir une essence d'indice d'octane plus élevé,
- sélectivité améliorée en distillats moyens.

Dans la majorité des cas, on cherche à minimiser la production de gaz légers, comprenant des composés ayant de 1 à 4 atomes de carbone par molécule, et, par conséquent, les catalyseurs sont conçus pour limiter la production de tels gaz légers.

Le procédé de craquage catalytique peut satisfaire dans une certaine mesure de telles demandes à condition en particulier d'adapter le catalyseur en vue de cette production. Une manière efficace d'adapter le catalyseur consiste à utiliser un phosphate de gallium substitué, éventuellement associé à une zéolithe Y, de façon à :

1) craquer les molécules lourdes avec une bonne sélectivité en distillats moyens,

2) être suffisamment résistant aux conditions sévères de pression partielle de vapeur d'eau et de température qui règnent dans le régénérateur d'un craqueur industriel.

Les importants travaux de recherche effectués par le demandeur sur de nombreuses zéolithes et solides microporeux cristallisés tels les phosphates d'aluminium et les phosphates de gallium substitués, l'ont conduit à découvrir que, de façon surprenante, un catalyseur contenant un phosphate de gallium microporeux cristallisé substitué avec un hétéroatome choisi dans le groupe constitué par les éléments : Li, Be, Co, Mg, Mn, Zn, Al, B, Cr, Fe, Ge, Si, Ti, As et V, et contenant éventuellement une zéolithe Y de structure faujasite, permet d'obtenir une sélectivité en essence et en distillats moyens nettement améliorée par rapport aux catalyseurs connus dans l'art antérieur.

Le phosphate de gallium et ses dérivé substitués sont caractérisés par :

a) la formule générale approchée suivante :

$R_r Ga_g P_p X_x O_2 F_f, h H_2 O$

où la somme de g, p et x est égale à 1, et où :

g     est un nombre compris entre 0,3 et 0,5, et de préférence entre 0,4 et 0,5

p     est un nombre compris entre 0,3 et O,5

x     est un nombre compris entre O et O,4, et de préférence entre O,01 et O,2

r     est un nombre compris entre O,O1 et O,2

f     est un nombre compris entre O,O1 et O,2

h     varie suivant le degré d'hydratation du solide entre O et O,5

R     est un composé organique, choisi dans le groupe formé par les amines cycliques, de préférence la quinuclidine,

X     est un hétéroatome choisi dans le groupe formé par les éléments : Li, Be, Co, Mg, Mn, Zn, Al, B, Cr, Fe, Ge, Si, Ti, As et V, de préférence Si.

b) un diagramme de diffraction des rayons X représenté dans le tableau 1.

L'identification du phosphate de gallium cristallisé microporeux et de ses dérivés substitués se fait de manière commode à partir de son diagramme de diffraction des rayons X. Ce diagramme est obtenu à l'aide d'un diffractiomètre en utilisant la méthode classique des poudres avec le rayonnement $K\alpha$ du cuivre. A partir de la position des pics de diffraction représentée par l'angle $2\theta$, on calcule, par la relation de Bragg, les équidistances réticulaires $d_{hkl}$ caractéristiques de l'échantillon.

L'estimation de l'erreur de mesure $\Delta(d_{hkl})$ sur $d_{hkl}$ se calcule en fonction de l'erreur absolue $\Delta(2\theta)$ affectée à la mesure de $2\theta$ par la relation de Bragg. Une erreur absolue $\Delta(2\theta)$ égale à $\pm 0,05°$ est communément admise. L'intensité $I_{rel.}$ affectée à chaque valeur de $d_{hkl}$ est mesurée d'après la hauteur du pic de diffraction correspondant.

Le dépouillement du diagramme de diffraction des rayons X présenté dans la tableau 1 de la présente description est représentatif du diagramme de diffraction du phosphate de gallium et de ses dérivés substitués.

Tableau 1.

| 2θ (°) | $d_{hkl}$ (Å) | $I_{rel.}$ |
|---|---|---|
| 3,4 - 3,6 | 25,9 - 24,5 | mf à m |
| 4,7 - 4,9 | 18,7 - 18,0 | f à mf |
| 5,9 - 6,1 | 14,9 - 14,4 | mf à m |
| 6,8 - 7,0 | 12,9 - 12,6 | f à mf |
| 7,4 - 7,6 | 11,9 - 11,6 | tf à f |
| 8,2 - 8,3 | 10,7 - 10,6 | mf à m |
| 8,3 - 8,6 | 10,6 - 10,5 | tf à f |
| 9,6 - 9,8 | 9,7 - 9,2 | TF |
| 10,1 - 10,3 | 8,75 - 8,58 | m à F |
| 11,3 - 11,5 | 7,82 - 7,68 | tf à f |

4

| | | |
|---|---|---|
| 11,8 - 12,0 | 7,49 - 7,36 | mf à mF |
| 12,3 - 12,5 | 7,18 - 7,07 | tf à f |
| 12,8 - 13,0 | 6,91 - 6,80 | tf à f |
| 13,6 - 13,8 | 6,50 - 6,41 | f à mf |
| 14,0 - 14,2 | 6,32 - 6,23 | m à mF |
| 14,4 - 14,6 | 6,14 - 6,06 | tf à f |
| 15,2 - 15,4 | 5,82 - 5,74 | tf à f |
| 15,6 - 15,8 | 5,67 - 5,60 | tf à f |
| 16,0 - 16,2 | 5,53 - 5,46 | tf à f |
| 16,7 - 16,9 | 5,30 - 5,24 | tf à f |
| 17,0 - 17,2 | 5,21 - 5,15 | tf à f |
| 17,4 - 17,6 | 5,09 - 5,03 | tf à f |
| 17,7 - 17,9 | 5,00 - 4,95 | tf à f |
| 18,4 - 18,6 | 4,81 - 4,76 | f à mf |
| 18,7 - 18,9 | 4,74 - 4,69 | tf à f |
| 19,4 - 19,6 | 4,57 - 4,52 | tf à f |
| 19,6 - 19,8 | 4,52 - 4,48 | tf à f |

| | | |
|---|---|---|
| 20,5 - 20,7 | 4,32 - 4,28 | mf à mF |
| 20,8 - 21,0 | 4,26 - 4,22 | tf à f |
| 21,1 - 21,3 | 4,20 - 4,16 | f à mf |
| 21,4 - 21,6 | 4,14 - 4,11 | tf à f |
| 21,7 - 21,9 | 4,09 - 4,05 | tf à f |
| 22,0 - 22,2 | 4,03 - 4,00 | tf à f |
| 22,3 - 22,4 | 3,98 - 3,95 | tf à f |
| 22,4 - 22,6 | 3,95 - 3,93 | tf à f |
| 22,7 - 22,9 | 3,91 - 3,88 | tf à f |
| 23,0 - 23,2 | 3,86 - 3,83 | tf à f |
| 23,3 - 23,5 | 3,81 - 3,78 | tf à f |
| 23,9 - 24,1 | 3,71 - 3,68 | f à mf |
| 24,2 - 24,4 | 3,67 - 3,64 | f à mf |
| 24,5 - 24,7 | 3,63 - 3,60 | f à mf |
| 24,8 - 25,0 | 3,58 - 3,55 | f à mf |
| 25,0 - 25,2 | 3,55 - 3,53 | tf à f |
| 25,3 - 25,5 | 3,51 - 3,49 | tf à f |

| | | |
|---|---|---|
| 25,6 – 25,8 | 3,47 – 3,45 | tf à f |
| 25,9 – 26,1 | 3,43 – 3,41 | f à mf |
| 26,4 – 26,6 | 3,37 – 3,34 | f à mf |
| 27,1 – 27,2 | 3,29 – 3,27 | f à mf |
| 27,6 – 27,8 | 3,22 – 3,20 | tf à f |
| 27,9 – 28,1 | 3,19 – 3,17 | tf à f |
| 28,4 – 28,6 | 3,13 – 3,11 | f à mf |
| 28,7 – 28,9 | 3,10 – 3,08 | mf à mF |
| 29,2 – 29,4 | 3,05 – 3,03 | tf à f |
| 29,6 – 29,8 | 3,01 – 2,995 | tf à f |
| 30,2 – 30,4 | 2,956 – 2,937 | tf à f |
| 30,5 – 30,7 | 2,928 – 2,909 | tf à f |
| 31,0 – 31,2 | 2,882 – 2,864 | f à mf |
| 32,0 – 32,2 | 2,794 – 2,777 | tf à f |
| 32,7 – 32,9 | 2,736 – 2,720 | tf à f |
| 33,3 – 33,5 | 2,688 – 2,672 | tf à f |
| 34,7 – 34,9 | 2,582 – 2,568 | tf à f |

| 35,4 – 35,6 | 2,533 – 2,519 | tf à f |
|---|---|---|
| 38,3 – 38,5 | 2,348 – 2,336 | tf à f |
| 43,1 – 43,3 | 2,096 – 2,087 | tf à f |
| 44,9 – 45,1 | 2,017 – 2,008 | tf à f |
| 48,0 – 48,2 | 1,893 – 1,886 | tf à f |

TF : très fort, F : fort, mF : moyen fort, m : moyen, mf : moyen faible, f : faible, tf : très faible.

Le procédé de préparation du phosphate de gallium et ses dérivés substitués, synthétisés en milieu fluorure, consiste en ce que :

a) on forme un mélange réactionnel qui renferme au moins les composés suivants : l'eau, au moins une source de gallium, au moins une source de phosphore, éventuellement au moins une source d'un hétéroatome X choisi dans le groupe formé par les éléments : Li, Be, Co, Mg, Mn, Zn, Al, B, Cr, Fe, Ge, Si, Ti, As et V, de préférence Si, au moins une source d'au moins un composé organique, au moins une source d'anions fluorures et éventuellement au moins une source d'au moins un composé acide ou basique pour ajuster le pH du milieu réactionnel à la valeur désirée, le pH du milieu réactionnel étant compris entre 3 et 8 et ledit mélange réactionnel ayant la composition, en termes de rapport molaire, suivante :

$$r'R : Ga_2O_3 : p'P_2O_5 : x'XO_{n/2} : f'F : h'H_2O$$

où $r'$ est un nombre compris entre 1 et 10, de préférence entre 5 et 10,

où $p'$ est un nombre compris entre 0,3 et 1, de préférence entre 0,5 et 1,

où $x'$ est un nombre compris entre 0 et 1,5, de préférence entre O et 1,

où $f'$ est un nombre compris entre O,1 et 4, de préférence entre O,3 et 2,

où $h'$ est un nombre compris entre 1 et 500, de préférence entre 30 et 100,

où $R'$ est un composé organique, choisi dans le groupe formé par les amines cycliques, de préférence la quinuclidine,

où n' est le degré d'oxydation de l'hétéroatome X,

b) on maintient ledit mélange réactionnel à une température de chauffage supérieure à 40 °C jusqu'à ce que l'on obtienne un composé cristallin.

Les anions fluorures peuvent être introduits sous forme d'acide fluorhydrique ou de ses sels. Ces sels sont formés avec des métaux alcalins, l'ammonium ou de préférence avec le composé organique utilisé. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium $(NH_4)_2SiF_6$ ou de sodium $Na_2SiF_6$.

Le composé organique est une amine cyclique. On utilise de préférence la quinuclidine.

Parmi les sources de gallium, on peut utiliser les oxydes et hydroxydes de gallium, comme GaOOH, les alkoxydes de gallium de formule $Ga(OR_1)_3$ où $R_1$ est un radical alkyle, les sels de gallium comme le fluorure de gallium, le phosphate de gallium ou le sulfate de gallium. On utilise de préférence le sulfate de gallium.

De nombreuses sources d'hétéroatomes peuvent être employées. Ainsi, dans le cas du silicium, on peut utiliser un hydrogel, un aérogel ou une suspension colloïdale, les oxydes de précipitation, les oxydes provenant de l'hydrolyse d'esters tels que l'orthosilicate d'éthyle Si(OEt)$_4$ ou les oxydes provenant de l'hydrolyse de complexes comme le fluorosilicate d'ammonium $(NH_4)_2SiF_6$ ou de sodium $Na_2SiF_6$.

La source de phosphore préférée est l'acide phosphorique $H_3PO_4$, mais ses sels et esters comme les phosphates alcalins, les phosphates de gallium ou les phosphates d'alkyles conviennent également.

Les acides ou sels d'acides, les bases ou sels basiques servant éventuellement à ajuster le pH du milieu réactionnel à la valeur souhaitée peuvent être choisis parmi les acides usuels, tels que par exemple l'acide chlorhydrique, l'acide sulfurique, l'acide nitrique ou l'acide acétique, les sels acides comme l'hydrogénofluorure d'ammonium ou l'hydrogénosulfate de sodium, les bases courantes usuelles comme l'ammoniaque ou l'hydroxyde de sodium et les bases azotées comme la méthylamine. Des mélanges tampons tels que le tampon acétate (acide acétique-acétate de sodium) ou le tampon ammoniacal (ammoniaque-chlorure d'ammonium) conviennent également.

La première étape du procédé de synthèse selon l'invention consiste à réaliser le mélange réactionnel comprenant l'eau, la source de gallium, la source de phosphore, éventuellement la source de l'hétéroatome X, la source d'anions fluorures, le composé organique, éventuellement une source de cations complémentaire pour la compensation des charges de la charpente et éventuellement au moins un composé acide ou basique. Le composé organique et le composé acide ou basique sont généralement ajoutés en dernier pour permettre l'ajustement du pH à a valeur désirée.

La seconde étape consiste en la cristallisation du mélange réactionnel formé dans la première étape. Elle s'effectue en chauffant le mélange réactionnel à une température comprise entre 40 et 250 °C, de préférence entre 60 et 220 °C sous pression autogène. On utilise de préférence un récipient bouché en polypropylène ou un autoclave intérieurement revêtu d'un matériau polymère, en général du polytétrafluoroéthylène, pour les températures inférieures à 100 °C et supérieures à 100 °C respectivement.

La durée du chauffage du mélange réactionnel nécessaire à la cristallisation dépend de la composition du mélange réactionnel et de la température de réaction.

La taille et la cinétique de formation des cristaux peuvent être modifiées par introduction dans le milieu réactionnel de germes constitués par des cristaux, éventuellement broyés, du phosphate de gallium et de ses dérivés substitués et par l'agitation en cours de cristallisation.

Après cristallisation, le phosphate de gallium cristallisé microporeux est séparé des eaux mères par filtration ou centrifugation, lavé à l'eau distillée et séché à l'air à 40 °C. Le solide ainsi obtenu contient occlus dans ses cavités le composé organique introduit dans le milieu réactionnel. Ce dernier est associé d'une part au fluorure et d'autre part joue le rôle de cation de compensation de la charge négative de la charpente résultant de l'incorporation de l'hétéroatome X dans la charpente cristallisée. En plus du composé organique, le phosphate de gallium peut contenir au sein de ses cavités de l'eau d'hydratation et des cations de compensation minéraux si les cations organiques ne sont pas en nombre suffisant. La déshydratation du solide selon l'invention peut être effectuée par chauffage à 150 °C.

Le phosphate de gallium et ses dérivés substitués ainsi préparés peuvent être débarrassés des composés organiques présents au sein des cavités après l'étape de synthèse par traitement de calcination à une température supérieure à 200 °C et de préférence comprise entre 350 et 450 °C.

Le catalyseur de la présente invention peut éventuellement renfermer une zéolithe Y de structure faujasite (Zeolite Molecular Sieves Structure, chemistry and uses, D.W. BRECK, J. WILLEY and Sons 1973). Parmi les zéolithes Y que l'on peut utiliser, on emploiera de préférence une zéolithe Y stabilisée, couramment appelée ultrastable ou USY soit sous forme au moins partiellement échangée avec des cations métalliques, par exemple des cations des métaux alcalino-terreux et/ou des cations des métaux de terres rares de numéro atomique 57 à 71 inclus, soit sous forme hydrogène.

Le catalyseur de la présente invention renferme également au moins une matrice habituellement amorphe ou mal cristallisée choisie par exemple dans le groupe formé par l'alumine, la silice, la magnésie, l'argile, l'oxyde de titane, la zircone, les phosphate d'aluminium, de titane et de zirconium, les combinaisons de deux au moins de ces composés et les combinaisons alumine-oxyde de bore.

La matrice est de préférence choisie dans le groupe formé par la silice, l'alumine, la magnésie, les combinaisons silice-alumine, les combinaisons silice-magnésie et l'argile.

Le catalyseur de la présente invention renferme :

a) de 20 à 95 %, de préférence de 30 à 85 % et de manière encore plus préférée de 50 à 80 % en poids d'au moins une matrice

b) de 1 à 60 %, de préférence de 4 à 50 % et de manière encore plus préférée de 10 à 40 % en poids d'au moins un phosphate de gallium microporeux cristallisé substitué par un élément choisi dans le groupe formé par les éléments : Li, Be, Co, Mg, Mn, Zn, Al, B, Cr, Fe, Ge, Si, Ti, As et V, de préférence Si, et caractérisé par sa formule générale approchée et son tableau de diffraction donnés précédemment, et

c) de 0 à 30 %, de préférence de 0 à 20 % et de manière encore plus préférée de 0 à 10 % d'au moins une zéolithe Y de structure faujasite, forme hydrogène, ayant les caractéristiques données ci-avant.

Le catalyseur de la présente invention peut être préparé par toutes les méthodes bien connues de l'homme du métier.

Le catalyseur peut être obtenu par mélange mécanique d'un premier produit contenant une matrice et le phosphate de gallium microporeux cristallisé substitué et, dans le cas où il contient une zéolithe Y, d'un second produit comprenant la zéolithe Y décrite ci-avant avec une matrice qui peut être identique ou différente de celle contenue dans ledit premier produit.

Après séchage par atomisation, ces produits peuvent encore contenir de 1 à 30 % en poids de matière volatile (eau et ammoniac).

Les conditions générales des réactions de craquage catalytique sont particulièrement connues pour ne pas être répétées ici dans le cadre de la présente invention (voir par exemple les brevets US-A-3 293 192, 3 449 070, 4 415 438, 3 518 051 et 3 607 043).

Les exemples suivants illustrent la présente invention sans toutefois en limiter la portée.

Exemple 1 : Préparation du phosphate de gallium substitué par l'élément silicium.

La source de silice utilisée est une silice de combustion commercialisée sous le nom d'Acrosil par Degussa.

Le sulfate de gallium hydraté est obtenu par dissolution à chaud de gallium, grade 1 de Johnson Matthey, dans de l'acide $H_2SO_4$ concentré en excès, reprise à température ordinaire de la suspension obtenue par l'éthanol à 60 % dans l'eau, reprécipitation, dans cette solution refroidie, du sulfate de gallium hydraté par addition d'éther, puis filtration et séchage ménagé.

On dissout 6,5 g de sulfate de gallium hydraté dans 8,5 g d'eau distillée, on ajoute 0,36 g de silice Aérosil, puis 6,66 g de quinuclidine. On ajoute à la préparation 2,31 g d'acide phosphorique et 0,5 g d'acide fluorhydrique.

La composition chimique du mélange réactionnel est alors la suivante :

$$6\ Q : 1\ Ga_2O_3 : 1\ P_2O_5 : 0,6\ SiO_2 : 1\ HF : 64\ H_2O$$

Le mélange réactionnel obtenu après agitation (pH = 4,5) est placé dans le même type d'autoclave que précédemment et porté à 150° C pendant 24 heures.

Après réaction, le solide entièrement cristallisé est filtré, lavé à l'eau distillée, séché à 40 °C. Le spectre de diffraction des rayons X correspond à celui du tableau 1 de la présente description.

L'analyse chimique du solide conduit à la formule suivante pour la forme anhydre et débarrassée du composé organique :

$$Ga_{0,5}P_{0,45}Si_{0,05}O_2$$

Exemple 2 : Préparation du catalyseur de craquage CAT.

Le catalyseur de craquage CAT est obtenu par mélange entre:
- 25 % en poids du phosphate de gallium substitué par du silicium préparé dans l'exemple 1, forme hydratée et contenant la quinuclidine
- 50 % de kaolin
- 25 % de silice ex. Ludox forme $NH_4^+$

Après mélange de ces trois constituants, le séchage est effectué par atomisation.

Le catalyseur CAT (6g) est alors introduit dans le réacteur (micro-unité) de tests catalytiques MAT.

On opère alors un traitement de calcination sous air à 450 °C, puis un traitement sous vapeur d'eau (100 % de vapeur d'eau) pendant 5 heures à 750° C.

Exemple 3 : Catalyseur non conforme à l'invention.

Le catalyseur non conforme à l'invention comprend une matrice et une zéolithe Y de paramètre cristallin égal à 24,57 Å.

Ce catalyseur est noté CAT 1, sa teneur en terres rares ($Re_2O_3$) est égale à 1,3 % en poids.

Avant test MAT, le catalyseur CAT 1 subit un traitement de calcination sous vapeur d'eau (100 % de vapeur d'eau) pendant 15 heures à 770 °C.

6 grammes du catalyseur CAT 1 ainsi traités sont introduits dans la micro-unité de tests catalytiques MAT.

Exemple 4 : Conditions et résultats des tests catalytiques.

L'aptitude de chaque catalyseur à convertir une charge lourde d'hydrocarbures est ensuite déterminée dans les conditions suivantes :
- quantité de catalyseur = 6 g
- rapport pondéral catalyseur/charge = C/O = 6 pour CAT et = 5 pour CAT 1
- durée de l'injection de la charge = 40 secondes
- WHSV = vitesse spatiale massique = 15 $h^{-1}$
- température = 510 °C

La charge utilisée a les caractéristiques suivantes :
- densité 15 °C = 0,932
- % poids S = 1,8
- % poids N = 0,2
- carbone Conradson % = 3,2
- Ni + V = 8 ppm
- viscosité 60 °C = 46,2 $mm^2$/S
- $I_R$ (60 °C) = 1,5061 (indice de réfraction de la charge)
- saturés = 44,5 % poids
- oléfines = 1,7 % poids
- aromatiques = 43,9 % poids
- résines = 8,6 % poids
- asphaltènes (insolubles au $C_5$) = 1,3 % poids

Comparaison des performances catalytiques.

Les résultats contenus dans le tableau 2 sont exprimés de la manière suivante :
- conversion de la charge en % poids
- rendement en gaz en % poids ($H_2$ + hydrocarbures de $C_1$ à $C_4$)
- répartition des gaz en % poids ($H_2$ + hydrocarbures de $C_1$ à $C_4$)
- rendement en essence en % poids $C_5$ à 220 °C
- rendement en LCO (distillats moyens : 220-380 °C) en % poids

- rendement en coke en % poids.

<u>Tableau 2</u>.

|  | CAT | CAT 1 |
|---|---|---|
| Conversion | 71,4 | 69,8 |
| Conversion liquide | 84,3 | 80,4 |
| Gaz secs ($K_2$ + $C_1$ + $C_2$) | 1,7 | 1,9 |
| $C_3$ - $C_4$ | 15,1 | 16,6 |
| Essence légère ($C_5$ - 160) | 35,0 | 35,4 |
| Essence lourde (160 - 220) | 16,3 | 12,6 |
| Essence totale | 51,3 | 48 |
| LCO | 17,9 | 15,8 |
| HCO + slurry | 10,7 | 14,2 |
| Coke | 3,3 | 3,3 |

Les rendements en essence et en distillats moyens sont supérieurs quand le catalyseur comprend le phosphate de gallium cristallisé microporeux substitué par l'élément silicium.

**Revendications**

1. Catalyseur renfermant :
   a) de 20 à 95 % en poids d'au moins une matrice
   b) de 1 à 60 % en poids d'au moins un phosphate de gallium microporeux cristallisé substitué par un élément choisi dans le groupe formé par les éléments : Li, Be, Co, Mg, Mn, Zn, Al, B, Cr, Fe, Ge, Si, Ti, As et V
   c) de 0 à 30 % en poids d'au moins une zéolithe Y, de structure faujasite, forme hydrogène, et caractérisé par les propriétés suivantes :
   a) la formule générale approchée suivante :

   $R_r Ga_g P_p X_x O_2 F_f, hH_2O$

où la somme de g, p et x est égale à 1, et où :

g  est un nombre compris entre 0,3 et 0,5

p  est un nombre compris entre 0,3 et 0,5

x  est un nombre compris entre 0,01 et 0,4

r  est un nombre compris entre 0,01 et 0,2

f  est un nombre compris entre 0,01 et 0,2

h  varie suivant le degré d'hydratation du solide entre 0 et 0,5

R  est un composé organique choisi dans le groupe formé par les amines cycliques,

X  est un hétéroatome choisi dans le groupe formé par les éléments : Li, Be, Co, Mg, Mn, Zn, Al, B, Cr, Fe, Ge, Si, Ti, As et V

b) un diagramme de diffraction des rayons X présenté dans le tableau 1.

2. Catalyseur selon la revendication 1 renfermant :

a) de 30 à 85 % en poids de matrice

b) de 4 à 50 % en poids de phosphate de gallium substitué

c) de 0 à 20 % en poids de zéolithe Y.

3. Catalyseur selon l'une des revendications 1 et 2 renfermant :

a) de 50 à 80 % en poids de matrice

b) de 10 à 40 % en poids de phosphate de gallium substitué

c) de 0 à 10 % en poids de zéolithe Y.

4. Catalyseur selon l'une des revendications 1 à 3 dans lequel ladite matrice est choisie dans le groupe formé par l'alumine, la silice, la magnésie, l'argile, l'oxyde de titane, la zircone, les phosphates d'aluminium, de titane et de zirconium, les combinaisons de deux au moins de ces composés et les combinaisons alumine-oxyde de bore.

5. Catalyseur selon l'une des revendications 1 à 4 dans lequel g est un nombre compris entre 0,4 et 0,5 et x un nombre compris entre 0,01 et 0,2.

6. Catalyseur selon l'une des revendications 1 à 5 dans lequel R est la quinuclidine.

7. Catalyseur selon l'une des revendications 1 à 6 dans lequel X est Si.

8. Procédé d'utilisation d'un catalyseur selon l'une des revendications 1 à 7 dans un procédé de craquage catalytique d'une charge hydrocarbonée.

**Claims**

1. A catalyst comprising:

a) 20% to 95% by weight of at least one matrix;

b) 1% to 60% by weight of at least one microporous crystalline gallium phosphate substituted with an element selected from the group formed by the following elements: Li, Be, Co, Mg, Mn, Zn, Al, B, Cr, Fe, Ge, Si, Ti, As and V,

c) 0 to 30% by weight of at least one Y zeolite with a faujasite structure, in its hydrogen form, characterised by the following properties:

a) the following approximate general formula:

$$R_r\ Ga_g\ P_p\ X_x\ O_2\ F_f,\ hH_2O$$

where the sum of g, p and x is equal to 1, and where

g is a number between 0.3 and 0.5,

p is a number between 0.3 and 0.5;

x is a number between 0.01 and 0.4,

r is a number between 0.01 and 0.2,

f is a number between 0.01 and 0.2,

h depends on the degree of hydration of the solid and is between 0 and 0.5;

R is an organic compound selected from the group formed by cyclic amines,

X is a heterotaom selected from the group formed by the elements: Li, Be, Co, Mg, Mn, Zn, Al, B, Cr, Fe, Ge, Si, Ti, As and V,
b) an X ray diffraction pattern as shown in Table 1.

2. A catalyst according to claim 1, comprising:
a) 30% to 85% by weight of matrix;
b) 4% to 50% by weight of substituted gallium phosphate;
c) 0 to 20% by weight of Y zeolite.

3. A catalyst according to claim 1 or claim 2, comprising:
a) 50% to 80% by weight of matrix;
b) 10% to 40% by weight of substituted gallium phosphate;
c) 0 to 10% by weight of Y zeolite.

4. A catalyst as claimed in any one of claims 1 to 3, in which said matrix is selected from the group formed by alumina, silica, magnesia, clay, titanium oxide, zirconia, aluminium, titanium and zirconium phosphates, combinations of at least two of these compounds and alumina - boron oxide combinations.

5. A catalyst as claimed in any one of claims 1 to 4, in which g is a number between 0.4 and 0.5 and x is a number between 0.01 and 0.2.

6. A catalyst as claimed in any one of claims 1 to 5, in which R is quinuclidine.

7. A catalyst as claimed in any one of claims 1 to 6, in which X is Si.

8. A method of using a catalyst according to any one of claims 1 to 7 in a catalytic cracking process for a hydrocarbon feed.

**Patentansprüche**

1. Katalysator umfassend:
a) 20 bis 95 Gew.% wenigstens einer Matrix,
b) 1 bis 60 Gew.% wenigstens eines kristallisierten, mikroporösen Galliumphosphates, das durch ein Element substituiert ist, das aus der durch die Elemente Li, Be, Co, Mg, Mn, Zn, Al, B, Cr, Fe, Ge, Si, Ti, As und V gebildeten Gruppe ausgewählt ist,
c) 0 bis 30 Gew.% wenigstens eines Zeoliths Y mit Faujasit-Struktur in der Wasserstofform, und gekennzeichnet durch die folgenden Eigenschaften:
a) die folgende allgemeine Überschlagsformel

$$R_r Ga_g P_p X_x O_2 F_f, hH_2 0$$

in der die Summe aus g, p und x gleich 1 ist, und in der:
g eine zwischen 0,3 und 0,5 liegende Zahl ist,
p eine zwischen 0,3 und 0,5 liegende Zahl ist,
x eine zwischen 0,01 und 0,4 liegende Zahl ist,
r eine zwischen 0,01 und 0,2 liegende Zahl ist,
f eine zwischen 0,01 und 0,2 liegende Zahl ist,
h gemäß dem Hydratisierungsgrad der Feststoffe zwischen 0 und 0,5 variiert,
R eine organische Verbindung ist, die aus der durch die cyclischen Amine gebildeten Gruppe ausgewählt ist,
X ein Heteroatom ist, das aus der durch die Elemente Li, Be, Co, Mg, Mn, Zn, Al, B, Cr, Fe, Ge, Si, Ti, As und V gebildeten Gruppe ausgewählt ist,
b) ein in Tabelle 1 dargestelltes Röntgenbeugungsdiagramm.

2. Katalysator nach Anspruch 1, umfassend:
a) 30 bis 85 Gew.% Matrix,
b) 4 bis 50 Gew.% substituiertes Galliumphosphat,
c) 0 bis 20 Gew.% Zeolith Y.

3. Katalysator nach einem der Ansprüche 1 und 2, umfassend:
   a) 50 bis 80 Gew.% Matrix,
   b) 10 bis 40 Gew.% substituiertes Galliumphosphat,
   c) 0 bis 10 Gew.% Zeolith Y.

4. Katalysator nach einem der Ansprüche 1 bis 3, worin die Matrix aus der Gruppe ausgewählt ist, die durch Aluminiumoxid, Siliciumdioxid, Magnesiumoxid, Ton, Titanoxid, Zirkonoxid, die Aluminium-, Titan- und Zirkonphosphate, die Kombinationen aus zwei wenigstens dieser Verbindungen und die Kombinationen Aluminiumoxid-Boroxid gebildet ist.

5. Katalysator nach einem der Ansprüche 1 bis 4, worin g eine zwischen 0,4 und 0,5 liegende Zahl ist, und x eine zwischen 0,01 und 0,2 liegende Zahl ist.

6. Katalysator nach einem der Ansprüche 1 bis 5, worin R Chinuclidin ist.

7. Katalysator nach einem der Ansprüche 1 bis 6, worin X Si ist.

8. Verfahren zur Verwendung eines Katalysators nach einem der Ansprüche 1 bis 7, in einem Verfahren zum katalytischen Cracken einer kohlenwasserstoffhaltigen Beschickung.